# EUROPÄISCHE PATENTANMELDUNG

(11) **EP 1 511 169 A2**
(43) Veröffentlichungstag der Anmeldung: **02.03.2005**
(21) Anmeldenummer: 04101787.2
(22) Anmeldetag: 28.04.2004
(51) Int. Cl.: H02P 6/20

(54) **Verfahren und Vorrichtung zum Steuern eines bürstenlosen Gleichstrommotors**

(30) Priorität: 25.08.2003 DE 10339028
(71) Anmelder: SIEMENS AKTIENGESELLSCHAFT, 80333 München (DE)
(72) Erfinder: Degen, Martin, 61389, Schmitten (DE); Grossmann, Reiner, 65779, Kelkheim-Fischbach (DE); Hexamer, Bernd, 55566, Meddersheim (DE); Jausel, Heiko, 67434, Neustadt an der Weinstra e (DE); Weiss, Werner, 61250, Usingen (DE)

(57) **Zusammenfassung**

Einem bürstenlosen Gleichstrommotor wird unterhalb eines vorgegebenen Schwellenwertes der Drehzahl (N) ein sinus- oder trapezförmiger Strom in seinen Strängen eingeprägt. Oberhalb des vorgegebenen Schwellenwertes der Drehzahl (N) wird der bürstenlose Gleichstrommotor (1) mit einer Blockkommutierung (BLOCK) betrieben. Der bürstenlose Gleichstrommotor erzeugt so über einen sehr weiten Betriebsbereich ein sehr gleichförmiges Drehmoment und kann zugleich sehr kompakt ausgebildet sein.

## Beschreibung

Die Erfindung betrifft ein Verfahren und eine Vorrichtung zum Steuern eines bürstenlosen Gleichstrommotors.

Bürstenlose Gleichstrommotoren (BLDC-Motoren) sind Maschinen mit Permanentmagneten im Rotor. Der Rotor erzeugt das Erregerfeld. Der Stator des BLDC-Motors besitzt eine Drehstromwicklung und wird von einem Wechselrichter gespeist, der Drehstrom zur Verfügung stellt. BLDC-Motoren sind selbstgeführte Maschinen und benötigen einen Drehwinkellagegeber zum Betrieb. Der Ankerstrom bildet zusammen mit dem Feld des Permanentmagneten ein zeitlich möglichst konstantes Drehmoment. Die Weiterschaltung des Statorfeldes erfolgt mit Hilfe des Wechselrichters rotorstellungsabhängig beziehungsweise polradlageabhängig so, dass sich zwischen der Statordrehdurchflutung und dem Rotorfeld ein konstanter Winkel von π/2 elektrisch einstellt. Die Polradlage wird vorzugsweise über Sensoren erfasst oder aus Klemmenspannungen und/oder Klemmenströmen abgeleitet. Das Betriebsverhalten entspricht weitgehend dem des Gleichstrommotors. BLDC-Motoren haben eine sehr gute Dynamik und können einfach gesteuert werden. Die bürstenlose Technik ist verschleiß- und wartungsfrei.

BLDC-Motoren werden insbesondere für Servolenkungen in Kraftfahrzeugen eingesetzt. Servolenkungen sind Einrichtungen zur Verstärkung der Lenkkraft, die dafür ausgelegt sind, eine von dem Fahrer des Kraftfahrzeugs aufgebrachte Lenkkraft zu verstärken. Das Verstärken der Kraft erfolgt elektromechanisch mittels des BLDC-Motors. Die Servolenkung umfasst vorzugsweise einen Drehmomentsensor, der das vom Fahrer auf das Lenkrad übertragene aktuelle Drehmoment erfasst. Das Drehmoment wird dann verstärkt, wobei der Verstärkungsfaktor abhängig sein kann von verschiedenen Betriebsgrößen des Kraftfahrzeugs. Anschließend wird der BLDC-Motor entsprechend angesteuert. Der BLDC-Motor ist vorzugsweise mittels eines Getriebes mit der Lenkreinrichtung des Kraftfahrzeugs gekoppelt. Ungleichförmigkeiten des Drehmoments, das von dem BLDC-Motor abgegeben wird, werden von dem Fahrer als Ruckeln am Lenkrad wahrgenommen. Eine Gleichförmigkeit des Drehmoments ist somit wesentlich für einen hohen Fahrkomfort. Derartige Ungleichförmigkeiten des Drehmoments werden auch als Drehmomentrippel bezeichnet.

Aus der DE 199 38 678 A1 ist ein Verfahren und eine Vorrichtung zum Steuern eines BLDC-Motors bekannt, der mit Blockkommutierung der Spannung betrieben wird. Der Gleichstrommotor wird so angesteuert, dass die angelegte Spannung von den für die Blockkommutierung vorgesehenen Spannungen in Abhängigkeit von der Drehzahl des Motors und dessen Stromaufnahme abweicht. Dazu ist eine Tabelle vorgesehen aus der geänderte Pulsweiten beim Umschalten der Wicklungen des Gleichstrommotors abhängig von der Drehzahl N und Stromwerten ausgelesen werden und entsprechend angesteuert werden.

Die Aufgabe der Erfindung ist, ein Verfahren und eine Vorrichtung zum Steuern eines BLDC-Motors zu schaffen, derart dass der BLDC-Motor über einen weiten Drehzahlbereich mit einem geringen Drehmoment-Ruckeln betreibbar ist.

Die Aufgabe wird gelöst durch die Merkmale der unabhängigen Patentansprüche. Vorteilhafte Ausgestaltungen der Erfindung sind in den Unteransprüchen gekennzeichnet.

Die Erfindung zeichnet sich aus durch ein Verfahren und eine entsprechende Vorrichtung zum Steuern des BLDC-Motors, bei dem unterhalb eines vorgegebenen Schwellenwertes der Drehzahl dem BLDC-Motor ein sinus- oder trapezförmiger Strom in seinen Strängen eingeprägt wird. Dies hat den Vorteil, dass unterhalb des vorgegebenen Schwellenwertes ein Drehmoment-Ruckeln sehr wirksam durch die Stromform verringert wird.
Die Erfindung zeichnet sich weiter dadurch aus, dass oberhalb des vorgegebenen Schwellenwertes der Drehzahl der Motor mittels einer Blockkommutierung betrieben wird. Dies hat den Vorteil, dass auch bei einem Betrieb des BLDC-Motors über einen weiten Drehzahlbereich und einen großen Leistungsbereich lediglich ein geringer Bauraum benötigt wird, da der BLDC-Motor bei Blockkommutierung mit einem sehr hohen Wirkungsgrad betrieben werden kann. Der Wirkungsgrad liegt bis zu 25% höher als bei dem Betrieb mit Einprägung eines sinus- oder trapezförmigen Stroms.

In einer vorteilhaften Ausgestaltung der Erfindung liegt der Schwellenwert der Drehzahl bei etwa der halben Leerlaufdrehzahl des BLDC-Motors. Dies hat den Vorteil, dass oberhalb dieser Drehzahl das auftretende Drehmomentrippeln zunehmend durch die Massenträgheit des Rotors des BLDC-Motors geglättet wird.

In einer weiteren vorteilhaften Ausgestaltung der Erfindung erfolgt oberhalb eines ersten Schwellenwertes der Drehzahl bis hin zu einem zweiten Schwellenwert der Drehzahl ein gleitender Übergang von dem sinus- oder trapezförmigen Einprägen des Stroms hin zur Blockkommutierung. Der Schwellenwert liegt zwischen dem ersten und zweiten Schwellenwert. Dies hat den Vorteil, dass bereits ab dem ersten Schwellenwert der Drehzahl der Wirkungsgrad gesteigert werden kann und bei Drehzahlen oberhalb des zweiten Schwellenwertes nahezu keine Drehmomentungleichförmigkeiten bei Blockkommutierung auftreten aufgrund der Massenträgheit des Rotors. Dabei ist es besonders vorteilhaft, wenn der erste Schwellenwert der Drehzahl in etwa 1/3 der Leerlaufdrehzahl des BLDC-Motors und der zweite Schwellenwert der Drehzahl in etwa 2/3 der Leerlaufdrehzahl des BLDC-Motors entspricht.

In einer weiteren vorteilhaften Ausgestaltung der Erfindung wird ein Spannungsverlauf, mit dem die Stränge (13-15) des BLDC-Motors beaufschlagt werden, mittels eines Modells des Gleichstrommotors abhängig von dem einzuprägenden sinus- oder trapezförmigen Stromverlauf ermittelt und dieser Spannungsverlauf gesteuert. Dies hat den Vorteil, dass der Strom auch ohne Stromsensor genau einstellbar ist.

Ausführungsbeispiele der Erfindung werden im Folgenden anhand der schematischen Zeichnungen erläutert. Es zeigen:

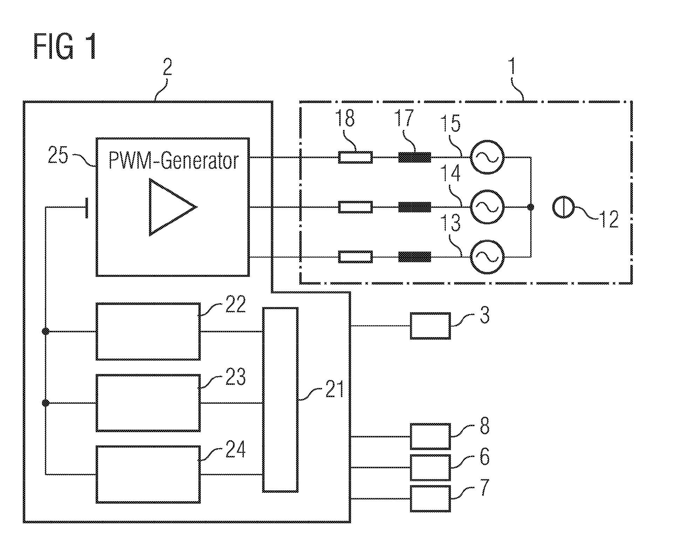

- Figur 1: einen BLDC-Motor 1 und eine Vorrichtung 2 zum Steuern des BLDC-Motors,
- Figur 2: ein Ablaufdiagramm eines Programms zum Steuern des BLDC-Motors gemäß Figur 1.

Elemente gleicher Konstruktion und Funktion sind figurenübergreifend mit den gleichen Bezugszeichen versehen.

Der BLDC-Motor 1 umfasst einen permanent erregten Rotor 12 und einen Stator, der vorzugsweise drei Stränge 13, 14, 15 aufweist, wobei die an diesen Strängen anliegende Last jeweils durch eine Induktivität 17 und einen Widerstand 18 darstellbar ist. Die drei Stränge 13-15 sind vorzugsweise in Sternschaltung geschaltet.

Eine Vorrichtung 2 zum Steuern des BLDC-Motors 1 hat eine Entscheidungseinheit 21, erste bis dritte Steuereinheiten 22 bis 24 und einen Pulsweitenmodulations-Generator 25.

Die Entscheidungseinheit 21 entscheidet abhängig von ihr zugeführten Betriebsgrößen, wie beispielsweise der Drehzahl N, mit der der BLDC-Motor 1 betrieben werden soll, oder auch des Drehmoments TQ, das von dem BLDC-Motor abgegeben werden soll, in welchem Steuermodus CTRL der BLDC-Motor betrieben werden soll. Der Steuereinheit 2 kann dafür beispielsweise ein Drehmomentsensor 7 zugeordnet sein, welcher das von einem Fahrer des Kraftfahrzeugs, in dem der BLDC-Motor bevorzugt eingebaut ist, erzeugte Drehmoment an einer mit dem Lenkrad gekoppelten Stange erfasst. Abhängig von diesem Drehmoment und ggf. weiteren Betriebsgrößen des Kraftfahrzeugs wird dann das durch den BLDC-Motor aufzubringende Drehmoment TQ ermittelt.

Der Vorrichtung 2 zum Steuern des BLDC-Motors 1 ist ferner ein Lagesensor 3 zugeordnet, der die Winkelstellung des Rotors 12 erfasst. Abhängig von dem zeitlichen Verlauf der erfassten Winkelstellung kann dann auch die Drehzahl N ermittelt werden. Der Lagesensor 3 kann als Hallsensor, als magnetoresistiver Sensor, als optischer Sensor oder als ein so genannte Resolver ausgebildet sein.

Die Entscheidungseinheit 21 entscheidet, welche der Steuereinheiten 22 bis 24 ein Stellsignal für einen Pulsweitenmodulationsgenerator 25 erzeugen. Diese Entscheidung erfolgt abhängig von dem zu steuernden Steuermodus CTRL. Ist der Steuermodus CTRL der des Einprägens eines sinus- oder trapezförmigen Stroms SINTRAP , so erzeugt die erste Steuereinheit 22 das Stellsignal. Ist hingegen der Steuermodus CTRL der Übergangsbetrieb TRANS, so erzeugt die zweite Steuereinheit 23 das Stellsignal. Ist der Steuermoduls CTRL die Blockkommutierung BLOCK, so erzeugt die dritte Steuereinheit 24 das Stellsignal.

Der Pulsweitenmodulations-Generator 25 erzeugt Spannungssignale, die mittels einer dem Pulsweitenmodulations-Generator 25 zugeordneten Brückenschaltung den jeweiligen Strängen 13, 14, 15 des BLDC-Motors 1 eingeprägt werden.

Es ist vorteilhaft, wenn mindestens zwei Stromsensoren 6, 8 vorgesehen sind, welche jeweils den Strom in einem Strang 13 bis 15 erfassen.

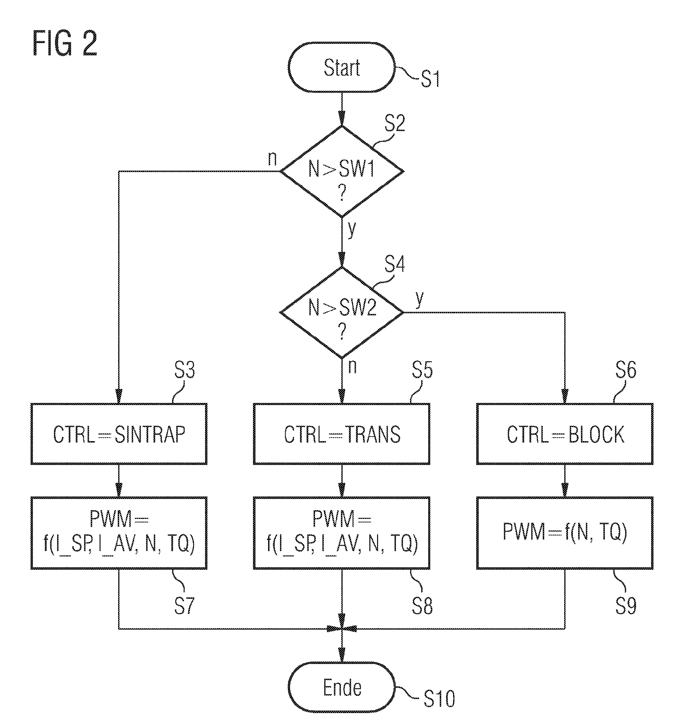

Ein Programm zum Steuern des BLDC-Motors 1 ist in der Vorrichtung 2 zum Steuern des BLDC-Motors 1 gespeichert und wird während des Betriebs des BLDC-Motors 1 abgearbeitet. Das Programm (Figur 2) wird in einem Schritt S1 gestartet, in dem gegebenenfalls Variablen initialisiert werden.

In einem Schritt S2 wird geprüft, ob die Drehzahl N, mit der der BLDC-Motor 1 betrieben werden soll, größer ist als ein erster Schwellenwert SW1. Der erste Schwellenwert SW1 wird vorzugsweise in etwa entsprechend 1/3 der Leerlaufdrehzahl des BLDC-Motors 1 gewählt. Ist die Bedingung des Schrittes S2 nicht erfüllt, so wird in einem Schritt S3 der Betriebsmodus CTRL des Einprägens des sinus- oder trapezförmigen Stroms SINTRAP gesteuert.

In einem Schritt S7 wird dann ein Stellsignal PWM für den Pulsweitenmodulations-Generator 25 erzeugt. Dies erfolgt abhängig von einem Sollwert I_SP des Stroms in dem jeweiligen Strang 13 bis 15. Der Sollwert I_SP des Stroms wird abhängig von dem Drehmoment, das der BLDC-Motor 1 abgeben soll und gegebenenfalls zusätzlich abhängig von der Drehzahl N, mit der der BLDC-Motor 1 betrieben werden soll, ermittelt. Bevorzugt ist ein Modell des BLDC-Motors vorhanden, mittels dessen abhängig von dem Sollwert I_SP des Stroms oder dessen sinusoder trapezförmigen Verlaufs das Stellsignal PWM ermittelt wird.

Durch das Einprägen des sinus- oder trapezförmigen Stroms in den Strängen 13 bis 15 wird bei niedrigeren Drehzahlen N, also Drehzahlen N, die niedriger sind als der erste Schwellenwert SW1 ein besonders gleichförmiges Drehmoment von dem BLDC-Motor 1 erzeugt.

Alternativ oder zusätzlich kann der Strom auch geregelt werden, wenn entsprechende Stromsensoren 6, 8 vorgesehen sind. In diesem Fall wird dann das Stellsignal PWM für den Pulsweitenmodulations-Generator 25 abhängig von der Differenz des Sollwertes I_SP und eines Istwertes I_AV des Stroms in den jeweiligen Strängen 13 - 15 ermittelt. Dadurch kann der Stromverlauf in den Strängen 13-15 noch präziser eingestellt werden, wenn die Stromsensoren den Istwert I_AV des Stroms genau erfassen.

Ist die Bedingung des Schrittes S2 hingegen erfüllt, d.h. die Drehzahl N, mit der der BLDC-Motor 1 betrieben werden soll, ist größer als der erste Schwellenwert SW1, so wird in einem Schritt S4 geprüft, ob die Drehzahl N, mit der der BLDC-Motor 1 betrieben werden soll, größer ist als ein zweiter Schwellenwert SW2.

Ist die Bedingung des Schrittes S4 erfüllt, so wird in einem Schritt S6 als Steuermodus CTRL der Betrieb mit Blockkommutierung BLOCK der Spannung vorgegeben.

In einem Schritt S9 wird das Stellsignal PWM für den Pulsweitenmodulations-Generator 25 abhängig von der Drehzahl N und/oder dem Drehmoment TQ erzeugt, das von dem BLDC-Motor 1 abgegeben werden soll. Es wird eine Blockkommutierung BLOCK gesteuert. Im Rahmen der Blockkommutierung BLOCK können den jeweiligen Strängen 13-15 Spannungsblöcke von 120 Grad mit 60 Grad Lücke oder Spannungsblöcke von 180 Grad eingeprägt werden abhängig von der Drehzahl N, mit der der BLDC-Motor 1 betrieben werden soll, oder dem Drehmoment TQ, mit dem der BLDC-Motor 1 betrieben werden soll.

Die Höhe der Spannung, mit der die einzelnen Stränge 13-15 im Steuermodus CTRL der Blockkommutierung BLOCK beaufschlagt werden, kann zudem mittels der Pulsweitenmodulation abhängig von der Drehzahl N und/oder dem Drehmoment TQ eingestellt werden, das der BLDC-Motor 1 erzeugen soll.

Im Steuermodus CTRL der Blockkommutierung BLOCK wird der BLDC-Motor 1 mit einem hohen Wirkungsgrad betrieben, der bis cirka 25% höher ist, als der im Steuermodus CTRL des Einprägens eines sinus- oder trapezförmigen Stroms SINTRAP. So kann auch ein kompakt ausgebildeter BLDC-Motor 1 auch bei hohen Drehzahlen N und hohen Drehmomenten TQ betrieben werden. Dadurch, dass der Steuermodus CTRL der Blockkommutierung BLOCK lediglich eingenommen wird, wenn die Drehzahl N größer ist als der zweiten Schwellenwert SW2, der bevorzugt bei 2/3 der Leerlaufdrehzahl N des BLDC-Motors 1 liegt, ist gewährleistet, dass während des Steuermodus CTRL der Blockkommutierung BLOCK die Drehmomentungleichförmigkeit sehr gering ist. Dies ist der Fall, da bei hohen Drehzahlen N, die über 2/3 der Leerlaufdrehzahl liegen, die bei Blockkommutierung BLOCK generell auftretenden Drehmomentungleichförmigkeiten durch die Massenträgheit des Rotors 12 sehr stark verringert werden.

In einem Schritt S10 wird das Programm dann beendet. Das Programm gemäß Figur 2 wird vorzugsweise nach einer vorgebbaren Zeitdauer erneut abgearbeitet.

Ist die Bedingung des Schrittes S4 nicht erfüllt, so wird ein Steuermodus CTRL des Übergangsbetriebs TRANS gesteuert.

In einem Schritt S8 wird das Stellsignal PWM für den Pulsweitenmodulations-Generator 25 abhängig von der Drehzahl N, mit der der BLDC-Motor 1 betrieben werden soll, und dem Drehmoment TQ, das von dem BLDC-Motor 1 erzeugt werden soll, und abhängig von dem Sollwert I_SP und gegebenenfalls dem Istwert I_AV des Stroms in dem jeweiligen Strang 13 bis 15 eingestellt. Mit steigender Drehzahl erfolgt hier gleitend ein Übergang von dem Einprägen des sinus- oder trapezförmigen Stroms SINTRAP hin zu der Blockkommutierung BLOCK der Spannung. Die Ansteuerung in dem Übergangsbereich erfolgt dabei abhängig von abgelegten Informationen, die durch Versuche mit dem BLDC-Motor vorab ermittelt wurden.

In einer besonders einfachen Ausgestaltung der Erfindung wird entweder der Steuermodus CTRL der Regelung SIN auf sinusförmigen Strom oder der Blockkommutierung BLOCK eingenommen. Die Entscheidung welcher Steuermodus CTRL eingenommen werden soll erfolgt dann abhängig von nur einem Schwellenwert der Drehzahl N, der dann bevorzugt in etwa bei der halben Leerlaufdrehzahl liegt.

## Patentansprüche

1. Verfahren zum Steuern eines bürstenlosen Gleichstrommotors, bei dem
- unterhalb eines vorgegebenen Schwellenwertes der Drehzahl (N) dem bürstenlosen Gleichstrommotor (1) ein sinus- oder trapezförmiger Strom in seinen Strängen (13, 14, 15) eingeprägt wird und
- oberhalb des vorgegebenen Schwellenwertes der Drehzahl (N) der bürstenlose Gleichstrommotor (1) mit einer Blockkommutierung (BLOCK) betrieben wird.

2. Verfahren nach Anspruch 1, **dadurch gekennzeichnet, dass** der Schwellenwert der Drehzahl (N) bei etwa der halben Leerlaufdrehzahl des bürstenlosen Gleichstrommotors liegt.

3. Verfahren nach einem der vorstehenden Ansprüche, **dadurch gekennzeichnet, dass** oberhalb eines ersten Schwellenwertes (SW1) der Drehzahl (N) bis hin zu einem zweiten Schwellenwert (SW2) der Drehzahl (N) ein gleitender Übergang von der sinus- oder trapezförmigen Einprägung des Stroms hin zur Blockkommutierung (BLOCK) der Spannung erfolgt, wobei der Schwellenwert zwischen dem ersten und zweiten Schwellenwert (SW1, SW2) liegt.

4. Verfahren nach Anspruch 3, **dadurch gekennzeichnet, dass** der erste Schwellenwert (SW1) der Drehzahl (N) in etwa einem Drittel der Leerlaufdrehzahl des büstenlosen Gleichstrommotors (1) entspricht und dass der zweite Schwellenwert (SW2) der Drehzahl (N) in etwa zwei Drittel der Leerlaufdrehzahl des bürstenlosen Gleichstrommotors (1) entspricht.

5. Verfahren nach einem der vorstehenden Ansprüche, **dadurch gekennzeichnet, dass** ein Spannungsverlauf, mit dem die Stränge (13-15) des bürstenlosen Gleichstrommotors beaufschlagt werden, mittels eines Modells des bürstenlosen Gleichstrommotors abhängig von dem einzuprägenden sinus- oder trapezförmigen Stromverlauf ermittelt wird und dieser Spannungsverlauf gesteuert wird.

6. Verfahren nach einem der vorstehenden Ansprüche, **dadurch gekennzeichnet, dass** eine Regelung des sinus- oder trapezförmigen Stroms erfolgt.

7. Vorrichtung zum Steuern eines bürstenlosen Gleichstrommotors mit
- einer ersten Steuereinheit (22), die unterhalb eines vorgegebenen Schwellenwertes der Drehzahl (N) dem bürstenlosen Gleichstrommotor (1) einen sinus- oder trapezförmigen Strom in seinen Strängen (13, 14, 15) einprägt, und
- einer weiteren Steuereinheit (24), die oberhalb des vorgegebenen Schwellenwertes der Drehzahl (N) den bürstenlosen Gleichstrommotor (1) mit einer Blockkommutierung (BLOCK) betreibt.
